# EUROPÄISCHE PATENTSCHRIFT

(11) **EP 3 954 577 B1**
(45) Veröffentlichungstag und Bekanntmachung des Hinweises auf die Patenterteilung: **30.10.2024**
(21) Anmeldenummer: 21187171.0
(22) Anmeldetag: 22.07.2021
(51) Int. Cl.: G03B 21/00, B60N 2/90, B60N 2/879, B60R 11/00, B60R 11/02

(54) **SYSTEM FÜR EIN FAHRZEUG MIT EINEM FAHRZEUGSITZ UND EINEM FAHRZEUGDACH**
SYSTEM FOR A VEHICLE WITH A VEHICLE SEAT AND A VEHICLE ROOF
SYSTÈME POUR UN VÉHICULE DOTÉ D'UN SIÈGE DE VÉHICULE ET D'UN TOIT DE VÉHICULE

(30) Priorität: 11.08.2020 DE 102020121077
(43) Veröffentlichungstag der Anmeldung: 16.02.2022
(73) Patentinhaber: GRAMMER AG, 92289 Ursensollen (DE)
(72) Erfinder: GERHARD, Daniel, 90425 Nürnberg (DE)
(74) Vertreter: Hannke Bittner & Partner mbB Regensburg

(56) Entgegenhaltungen:
- EP-A1- 2 746 833
- EP-A1- 3 680 131
- DE-C1- 10 226 451
- DE-U1- 202015 102 061
- DE-U1- 202019 102 868
- JP-A- 2002 114 095
- US-A- 3 867 633
- US-A1- 2017 240 106
- US-A1- 2018 149 958

## Beschreibung

Die Erfindung betrifft ein System für ein Fahrzeug mit mindestens einem Fahrzeugsitz, der ein Sitzteil und eine Rückenlehne mit einer darüber angeordneten Kopfstütze umfasst und mit einem Fahrzeugdach, welches sich zumindest über die Kopfstütze hinweg erstreckt, gemäß dem Oberbegriff des Patentanspruches 1.

Herkömmlicherweise weisen Fahrzeuge ein Fahrzeugdach und Fahrzeugsitze auf. Insbesondere PKWs sind an der Innenseite des Fahrzeugdaches mit einem Fahrzeughimmel ausgestattet, sofern es sich um ein nichtbewegliches Fahrzeugdach handelt. Aber auch Cabrios sind unabhängig davon, ob sie mit einem Retractable Hard Top oder einem Faltdach ausgestattet sind, an der Innenseite des Fahrzeugdaches - zumindest im geschlossenen Zustand des Hardtops oder des Faltdaches - mit einer Innenseite ausgestattet, deren Oberfläche glatt ist.

Da im Zuge der Weiterentwicklung von Fahrzeugen, insbesondere PKWs, - auch in Hinblick auf das autonome Fahren - immer mehr der Aufenthalt innerhalb eines Fahrzeuges ohne aktive Teilnahme der Person und/oder des Fahrers am Verkehrsgeschehen stadtfinden wird, besteht vermehrt der Wunsch nach einer zunehmenden Innenraumbeleuchtung des Fahrzeuges, die auch den Fahrzeughimmel bzw. die Innenseite des Fahrzeugdaches mit einschließt. Bisher sind dazu keine Systeme bekannt, die es ermöglichen, den Fahrzeughimmel bzw. die Innenseite des Fahrzeugdaches zumindest teilweise flächenmäßig auszuleuchten bzw. mit bestimmten Lichteffekten zu bestrahlen, um ein angenehmes Ambiente innerhalb des Fahrzeugraumes für die sich darin aufhaltenden Personen zu schaffen. Die DE10226451 zeigt ein System für ein Fahrzeug mit mindestens einem Fahrzeugsitz, der ein Sitzteil und eine Rückenlehne mit darüber angeordneter Kopfstütze umfasst, und mit einem Fahrzeugdach, welches sich zumindest über die Kopfstütze hinweg erstreckt, wobei in die Kopfstütze ein Projektionsgerät integriert ist, welches ein Bild auf eine Innenseite des Fahrzeugdaches projiziert.

Deshalb ist es Aufgabe der Erfindung, ein System für ein Fahrzeug mit mind. einem Fahrzeugsitz, mit einer Kopfstütze und einem Fahrzeugdach zur Verfügung zu stellen, in welchem sich die Innenseite des Fahrzeugdaches in seiner Oberflächendarstellung verändern lässt.

Diese Aufgabe wird erfindungsgemäß durch die Merkmale des Patentanspruches 1 gelöst.

Ein wesentlicher Gedanke der Erfindung liegt darin, dass bei einem System für ein Fahrzeug mit mindestens einem Fahrzeugsitz, der ein Sitzteil und eine Rückenlehne mit darüber angeordneter Kopfstütze umfasst und mit einem Fahrzeugdach, welches sich zumindest über die Kopfstütze hinweg erstreckt, ein Projektionsgerät in die Kopfstütze integriert ist, welches ein Bild auf eine Innenseite des Fahrzeugdaches projiziert. Nicht erfindungsgemäß können Projektionsgeräte in einzelnen Fahrzeugsäulen an deren Innenseite, beispielsweise an beiden B-Säulen, angeordnet sein, welche die Innenseite des Fahrzeugdaches ausleuchten sollen. Dies hat den Vorteil, dass eine Positionsveränderung der Projektionsgeräte nicht möglich ist, wohingegen eine Kopfstütze in ihrer Höhe verstellt werden kann und deshalb eine Schärfeeinstellung des zu projizierenden Bildes korrigiert werden muss, indem beispielsweise Linsenbrennweiten durch Verstellen von Linsen verändert werden. Nicht erfindungsgemäß ist auch die Anordnung des Projektionsgerätes in der Mittelkonsole denkbar.

Ein derartiges System zur Projektierung von Bildern verschiedenster Art auf die Innenseite des Fahrzeugdaches unabhängig davon, ob die Innenseite einen Dachhimmel aufweist oder lediglich die Innenseite eines Faltdaches bei einem Cabrio ist, ermöglicht vorteilhaft die Anordnung des Projektionsgerätes an einem Ort, der für jeden Insassen des Fahrzeuges nicht störend wirkt und in der Regel von allen Insassen nicht direkt sichtbar ist. Denn die Anordnung des Projektionsgerätes an der Oberseite bzw. im oberen Bereich einer Kopfstütze wird von keiner Person störend wahrgenommen, solang das Design der Kopfstütze an sich nicht darunter leidet und die Funktion der Kopfstütze im Falle eines Aufpralles nicht beeinträchtigt wird. Dies trifft auch auf die Anordnung der Projektionsgeräte an der inneren Seite der Fahrzeugsäulen im oberen Bereich zu.

Zwar ist eine derartige Integration eines Projektionsgerätes im oberen Bereich einer Kopfstütze mit der Schwierigkeit verbunden, dass es aufgrund des kurzen Abstandes von der Kopfstütze zu der Innenseite des Daches bzw. dem Dachhimmel nicht ganz einfach ist, ein entsprechend flächengroßes Bild ohne gewünschte Verzerrung auf die Innenseite des Daches mit einem Projektor zu werfen.

Jedoch ist hierzu erfindungsgemäß ein Linsenaufbau im Einsatz, der eine Verteilung der vom Projektionsgerät ausgesendeten bilddatentragenden Projektionslichtstrahlen über einen Winkel von 150° - 220°, vorzugsweise 180° ausgehend in einer Flächenerstreckung einer virtuellen Ebene an einer Oberseite der Kopfstütze durchführt. Dies ermöglicht nicht nur die Abbildung von Bildbestandteilen in einem mittleren, großflächigen und weitestgehend ebenen Bereich eines Dachhimmels oberhalb der Kopfstütze, sondern auch die Abbildung von Bildelementen in den Bereichen der A-, B- und C-Säulen, an denen entlang sich der Dachhimmel bis zu einer gewissen Grenze nach unten zieht.

Ebenso ist es denkbar, dass aufgrund der Ausbildung eines bestimmten Linsenaufbaus eine Textilabdeckung eines großflächigen Schiebedaches als Projektionsfläche dient.

Als untere Innenseite eines Fahrzeugdaches kann bspw. ein bereits erwähnter Dachhimmel oder eine Textilabdeckung eines Glasdaches dienen. Ebenso ist die Innenseite eines Faltdaches eines Cabriolet-Fahrzeuges oder die Innenseite eines Retractable Hard Tops denkbar.

Gemäß einer bevorzugten Ausführungsform ist bei dem erwähnten erfindungsgemäßen System die Innenseite mit einer bildwiedergebenden Optimierungsschicht, wie eine Lumineszenzschicht, eine Lichtreflexionsschicht und/oder eine Retroreflexionsschicht oder eine metallpigmentierten Lackschicht versehen. Dies ermöglicht, dass an der Oberfläche eines Dachhimmels oder allgemein einer Innenseite eines Fahrzeugdaches eine verbesserte Bilddarstellung auch während des Tages, an dem Tageslicht in das Fahrzeug gelangt, möglich ist.

Selbstverständlich können zusätzliche Jalousieelemente oder andere Verdunklungsmaßnahmen an den Seitenscheiben und an der Vorder- und Rückscheibe dazu dienen, ein dunkleres Ambiente innerhalb des Innenraums des Fahrzeuges zu schaffen, um eine derartige Bilddarstellung entsprechend zu unterstützen.

Aufgrund des erfindungsgemäßen Linsenaufbaus, der auch aus zwei oder mehreren an der Kopfstütze nebeneinander angeordneten oder in die Kopfstütze integrierten Linseneinheiten bestehen kann, ist es möglich, dass eine an die 3D-Geometrie des Dachhimmels angepasste Projektion des zu projizierenden Bildes ohne ungewünschte Verzerrung ermöglicht wird. So kann beispielsweise bei der Anordnung von zwei Linseneinheiten nebeneinander auf der Oberseite der Kopfstütze erreicht werden, dass die eine Linseneinheit für die linke Seite des Dachhimmels und die andere Linseneinheit für die rechte Seite des Dachhimmels, bei Betrachtung in Fahrtrichtung, eine Projektion zur Verfügung stellt. Ebenso ist denkbar, dass die eine Linse den hinteren Bereich des Dachhimmels und die andere Linse den vorderen Bereich des Dachhimmels mit einer Projektion abdeckt. Selbstverständlich können aufgrund derartiger Anordnungen von zwei oder mehreren Linsen auch Lichtspiele und sich bewegende Bilder, wie es bspw. bei Lichtorgeln bekannt ist, ermöglicht werden. Diese bewegenden Bilder können sogar gegenläufig in ihrem Kreisverlauf abgespielt werden.

Derartige Linsenaufbauten und insbesondere deren Linseneinheiten können bspw. eine Fischaugenlinse und/oder einen Kurzdistanzbeamer umfassen, um auf diese Weise eine starke Bildlichtstrahlenverteilung über die kurze Distanz zwischen Kopfstütze und Dachhimmel zu erreichen. Selbstverständlich sind auch andere optische Hilfsmittel hierfür denkbar. Insbesondere kann auch eine entsprechend programmierte Software dazu dienen, nach Erfassung und Berechnung der 3D Form eines Dachhimmels eine verzerrungsfreie Abstrahlung der Bildlichtstrahlen zu ermöglichen.

Erfindungsgemäß ist eine Steuerungseinrichtung vorhanden, die mittels Steuerungselemente in dem Projektionsgerät und eventuell einer Berechnungseinrichtung die Verteilung der Projektionslichtstrahlen/Bildlichtstrahlen an der sich vorzugsweise dreidimensional erstreckenden Innenseite des Fahrzeugdaches derart steuert und eventuell berechnet, dass ein verzerrungsfreies Bild entsteht. Hierfür ist es auch denkbar, dass die Steuerungseinrichtung zusätzlich einzelne Linsenelemente und ggf. lichtstrahlenablenkende andere Elemente, wie bspw. Spiegelelemente, derart steuert, dass durch die Umlenkung der Lichtstrahlen ein verzerrungsfreies Bild am Dachhimmel entsteht.

Das erwähnte Bild kann nicht nur ein stehendes, sondern auch ein sich bewegendes und/oder animiertes Bild sein. Beispielsweise könnten unterschiedliche Szenarien eine Ambientebeleuchtung darstellen, wie einen Sternenhimmel als Abbildung, einen Wolkenhimmel als Abbildung oder dergleichen. Diese Sternen- und Wolkenhimmel könnten sich dann auch über den Dachhimmel hinweg als Bild bewegen.

Weitere vorteilhafte Ausführungsformen ergeben sich aus der Zeichnung in Verbindung mit der Beschreibung.

Hierbei zeigen:
- Fig. 1: in einer schematischen Darstellung einer Seitendarstellung eines erfindungsgemäßen Systems mit einem Fahrzeugdach und einem Fahrzeugsitz mit Kopfstütze, gemäß einer ersten Ausführungsform der Erfindung;
- Fig. 2: in einer Vorderansicht ein erfindungsgemäßes System mit einem Fahrzeugsitz, mit Kopfstütze und Dach gemäß einer zweiten Ausführungsform der Erfindung;
- Fig.3: in einer schematischen Darstellung einer Seitenansicht eines erfindungsgemäßen Systems gemäß einer dritten Ausführungsform der Erfindung;
- Fig.4: in einer schematischen Darstellung einer Seitenansicht des erfindungsgemäßen Systems gemäß einer vierten Ausführungsform der Erfindung.

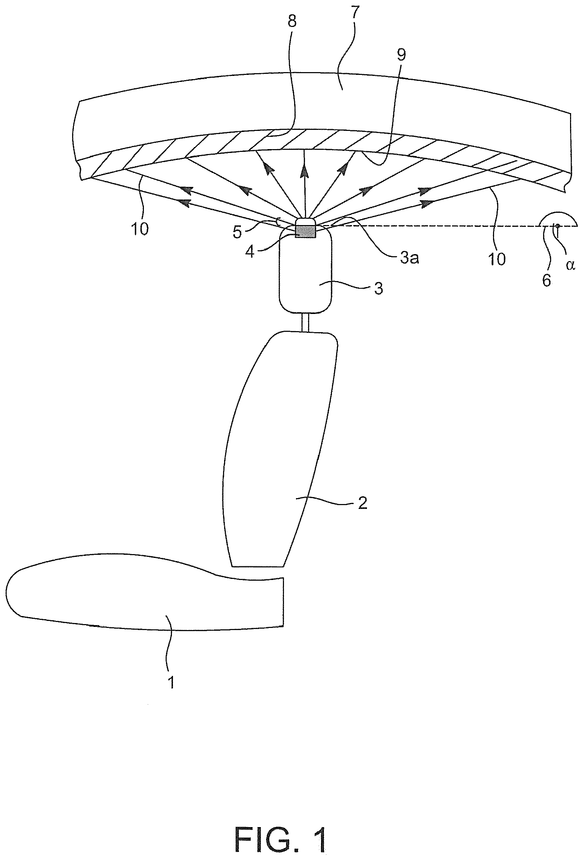

In Fig. 1 ist in einer schematischen Darstellung das erfindungsgemäße System gemäß einer ersten Ausführungsform der Erfindung gezeigt. Hierbei wird ein Fahrzeugsitz mit einem Sitzteil 1 und einer Rückenlehne 2 wiedergegeben, wobei an der Oberseite der Rückenlehne 2 sich eine Kopfstütze 3 anschließt.

Auf einer Oberseite 3a der Kopfstütze 3 ist ein Projektionsgerät 4 mit einem Linsenaufbau 5 angeordnet, welches mehr oder weniger in der Kopfstütze 3 integriert eingebaut sein kann, ohne die eigentliche polsternde Funktion und Aufprallfunktion der Kopfstütze zu beeinträchtigen.

Eine derartige Steuerungseinrichtung kann ebenso innerhalb der Kopfstütze 3 mittig angeordnet sein, um so sämtliche Elemente innerhalb der Kopfstütze für die Durchführung des erfindungsgemäßen Systems angeordnet zu haben. Alternativ ist selbstverständlich die Anordnung einer Steuereinrichtung außerhalb der Kopfstütze, beispielsweise unterhalb des Sitzteils 1, denkbar.

Der Linsenaufbau 5 ist derart gestaltet, dass er bevorzugt über einen Winkel α von 180° entlang einer virtuellen Ebene 6, die die Oberseite der Kopfstütze 3 in horizontaler Ausrichtung streift, Lichtstrahlen in verschiedenste Richtungen ausstrahlen kann, sodass eine Projektion eines Bildes mit den Lichtstrahlen 10 nicht nur an der Oberseite eines zumeist leicht gewölbten Dachhimmels 9 eines Fahrzeugdaches 7 ermöglicht wird, sondern auch an hier nicht näher dargestellten seitlich angeordneten A-, B- oder C-Säulen, auf die sich teilweise der Dachhimmel heruntererstreckt. Somit ist eine Projektion eines Bildes selbst auf Höhe der virtuellen Ebene 6, also auf der Höhe der Oberseite der Kopfstütze, im seitlichen Bereich des Fahrzeuginnenraumes möglich. Zusätzlich oder alternativ können einzelne Lichtprojektionsgeräte in den Fahrzeug-Säulen, wie beispielsweise den beiden B-Säulen, angeordnet sein, um hier aus die Projektionslichtstrahlen an die Innenseite des Fahrzeugdaches auszusenden.

Das Fahrzeugdach 7 weist zudem an der Innenseite 9 des Fahrzeugdaches bzw. dessen Dachhimmel vorteilhaft eine Oberflächenschicht 8 auf, die eine entsprechend bilddatenoptimierende Oberflächenstruktur oder Zusammensetzung aufweist. Beispiele hierfür sind Lumineszenzschichten, Lichtreflexionsschichten, Retroreflexionsschichten oder metallpigmentierte Lackschichten.

Als Lichtprojektionseinrichtungen können nicht nur Laser emittierende Projektionseinrichtungen verwendet werden, sondern auch beispielsweise auf DLP (Digital Light Processing) beruhende Projektionsanlagen. Hierbei werden Bilder erzeugt, indem ein digitales Bild auf einen Lichtstrahl aufmoduliert wird. Dabei wird der Lichtstrahl durch eine rechteckige Anordnung von beweglichen Mikrospiegeln in Pixel zerlegt und dann pixelweise entweder in dem Projektionsweg hinein oder aus dem Projektionsweg hinaus reflektiert.

Selbstverständlich können auch ganz normale lichtstrahlwiedergebende Quellen als Projektionseinrichtungen verwendet werden, wobei hierbei - ebenso wie bei den oben genannten Quellen - in Kombination eine Fischaugenlinse im Linsenaufbau verwendet wird, um eine entsprechende Verteilung der Lichtstrahlen zu erreichen. Eine derartige Fischaugenlinse kann jedoch auch ebenso wie ein Kurzdistanzbeamer in Kombination mit Laserquellen verwendet werden.

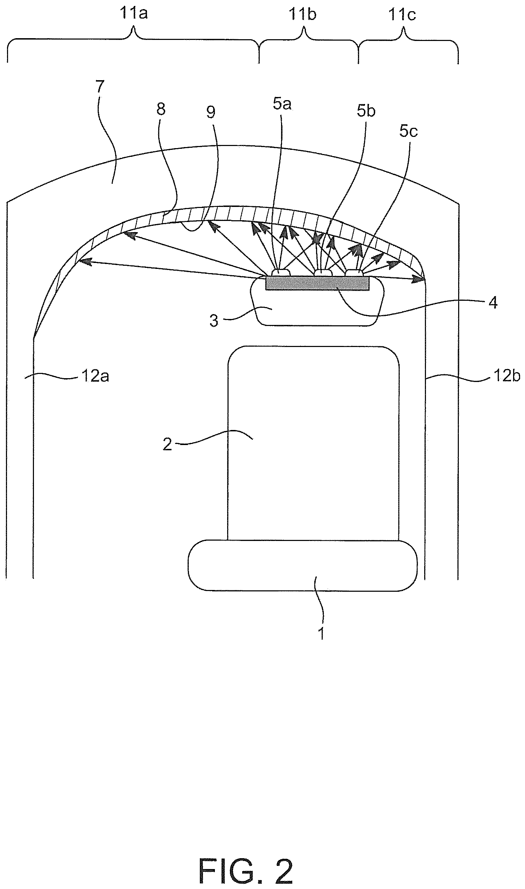

In Fig. 2 ist das erfindungsgemäße System gemäß einer weiteren Ausführungsform dargestellt. Dieser Darstellung ist zu entnehmen, dass bei einem Fahrzeugsitz mit einem Sitzteil, einer Rückenlehne 2 und einer Kopfstütze 3 an der Oberseite 3a der Kopfstütze 3 der Linsenaufbau nicht nur aus einer Linseneinheit, sondern aus insgesamt drei Linseneinheiten 5a, 5b und 5c besteht.

Diese Nebeneinanderanordnung der Linseneinheiten mit der eigentlichen Projektionseinrichtung 4 hat zufolge, dass man die zu bestrahlende Fläche für die Wiedergabe des Bildes auf die drei Linsen aufteilen kann. Vorteilhaft ist hierbei, dass die kurze Entfernung zwischen den Linseneinheiten und der Innenseite für die Wiedergabe eines verzerrungsfreien Bildes nicht erschwerend entgegensteht, da nicht der gesamte Flächenbereich über 180° mit einer einzigen Linseneinheit abgedeckt werden muss.

Vielmehr wird mit der ersten Linseneinheit 5a der Flächenbereich 11a der Innenseite des Daches abgedeckt, mit der Linseneinheit 5b der Flächenbereich 11b und mit der Linseneinheit 5c der Flächenbereich 11c. Die einzelnen abzudeckenden Bereiche bzw. Abschnitte des Fahrzeugdaches, können hierbei übergreifend beleuchtet werden, sodass bestimmte in den Abschnitten 11a, 11b und 11c sich überlappende Bereiche hinsichtlich der Lichtstrahlen entstehen. Hierdurch können spezielle Effekte in diesen überlappenden Bereichen in gewünschter Form erreicht werden.

In dieser Darstellung sind auch beispielsweise zwei B-Säulen 12a und 12b wiedergegeben, die Teile eines Dachhimmels 9 und der dazugehörigen Oberflächenschicht 8 in ihrem oberen Bereich aufweisen. Somit ist dieser Darstellung zu entnehmen, dass Teile der B-Säulen 12a und 12b bei einer 180° Ausleuchtung des Dachhimmels mit einem Bild mitbeleuchtet werden und somit das gewünschte Ambiente aufgrund des seitlich heruntergezogenen Dachhimmels verstärken können.

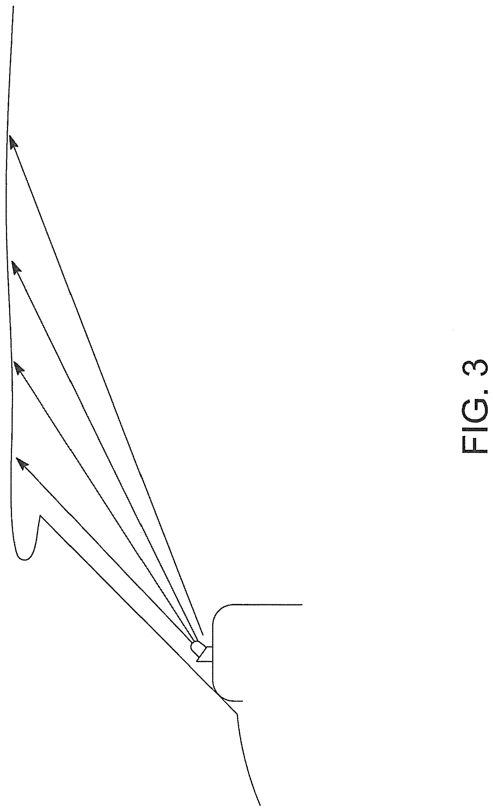

In Fig.3 ist in einer schematischen Darstellung eine Seitenansicht des erfindungsgemäßen Systems gemäß einer dritten Ausführungsform der Verbindung gezeigt. In dieser Darstellung soll verdeutlicht werden, dass im Armaturenbereich, beispielsweise auf dem Armaturenbrett bzw. auf der I-Tafel/Armaturentafel das Projektionsgerät angeordnet sein kann, um von dort den Dachhimmel eines Fahrzeugdaches mit einem zu projizierenden Bild zu versehen.

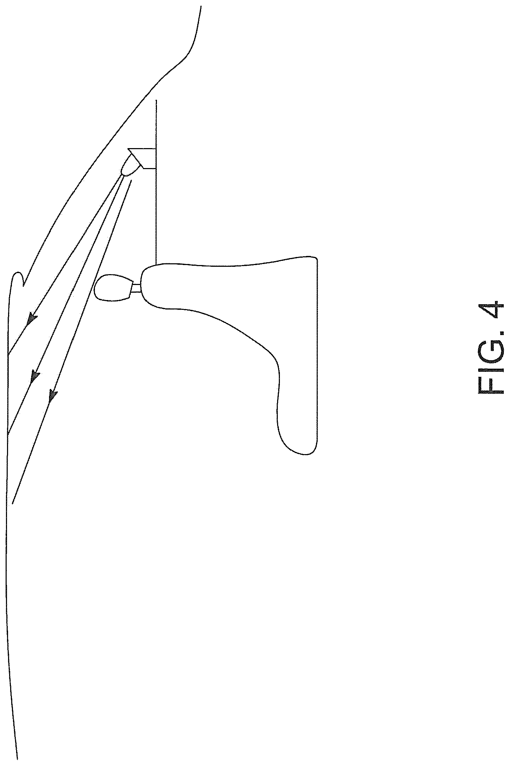

In Fig.4 wird gemäß einer vierten Ausführungsform der Erfindung in einer Seitendarstellung widergegeben, dass das Projektionsgerät im hinteren Bereich eines Fahrzeuges, also hinter einer Rücksitzbank auf der Hutablage beispielsweise angeordnet sein kann, um von dort die Projektion eines Bildes auf den Dachhimmel gemäß den dargestellten Pfeilstrahlen durchzuführen.

### Bezugszeichenliste

- 1: Sitzteil
- 2: Rückenlehne
- 3: Kopfstütze,
- 3a: Oberseite der Kopfstütze
- 4: Projektionsgerät, Projektionseinrichtung
- 5: Linsenaufbau
- 5a, 5b, 5c: Linseneinheiten
- 6: virtuelle Ebene
- 7: Fahrzeugdach
- 8: Oberflächenschicht
- 9: Dachhimmel, Innenseite des Fahrzeugdaches
- 10: Lichtstrahlen
- 11a, 11b, 11c: Flächenbereiche der Innenseite des Daches
- 12a, 12b: B-Säulen
- α: Winkel

## Patentansprüche

1. System für ein Fahrzeug mit mindestens einem Fahrzeugsitz, der ein Sitzteil (1) und eine Rückenlehne (2) mit darüber angeordneter Kopfstütze (3) umfasst, und mit einem Fahrzeugdach (7), welches sich zumindest über die Kopfstütze (3) hinweg erstreckt, wobei
in die Kopfstütze (3) ein Projektionsgerät (4) integriert ist, welches ein Bild auf eine Innenseite (9) des Fahrzeugdaches (7) projiziert,
**dadurch gekennzeichnet, dass**
das Projektionsgerät (4) einen Linsenaufbau (5) aufweist, der eine direkte Verteilung der vom Projektionsgerät (4) ausgesendeten bilddatentragenden Projektionslichtstrahlen (10) über einen Winkel (α) von 150°-220°, ausgehend von einer Flächenerstreckung einer virtuellen Ebene (6) an einer Oberseite (3a) der Kopfstütze (3), durchführt,
wobei das System eine Steuerungseinrichtung umfasst, die mittels Steuerungselementen in den Projektionsgerät (4) die Verteilung der Projektionslichtstrahlen (10) an der sich dreidimensional erstreckenden Innenseite des Fahrzeugdaches (7) derart steuert, dass ein verzerrungsfreies Bild entsteht.

2. System nach Anspruch 1,
**dadurch gekennzeichnet, dass**
die Innenseite (9) des Fahrzeugdaches (7) ein Dachhimmel und/oder eine Textilabdeckung eines Glasdaches ist.

3. System nach einem der vorangegangenen Ansprüche,
**dadurch gekennzeichnet, dass**
die Innenseite (9) mit einer bildwiedergebenden Optimierungsschicht, wie eine Lumineszenzschicht, einer Lichtreflexionsschicht und/oder einer Retroreflexionsschicht und/oder einer metallpigmentierten Lackschicht versehen ist.

4. System nach einem der vorangegangenen Ansprüche,
**dadurch gekennzeichnet, dass**
die Lichtstrahlen (10) über einen Winkel (α) von 180° ausgehend von der Flächenstreckung der virtuellen Ebene (6) verteilt sind.

5. System nach Anspruch 4,
**dadurch gekennzeichnet, dass**
der Linsenaufbau mindestens eine Fischaugenlinse und/oder einen Kurzdistanzbeamer umfasst.

6. System nach Anspruch 4 oder 5,
**dadurch gekennzeichnet, dass**
der Linsenaufbau aus zwei oder mehreren an der Kopfstütze (3) nebeneinander angeordneten Linseneinheiten (5a, 5b, 5c) besteht, deren Projektionslichtstrahlen (10) einzelne ihnen zugeordnete Abschnitte (11a, 11b, 11c) der Innenseite (9) des Fahrzeugdaches beleuchten.

7. System nach einem der vorangegangenen Ansprüche,
**dadurch gekennzeichnet, dass**
eine Steuerungseinrichtung mittels Steuerungselemente in dem Projektionsgerät (4) und/oder eine Berechnungseinrichtung die Verteilung der Projektionslichtstrahlen (10) an der sich vorzugsweise dreidimensional erstreckenden Innenseite (9) des Fahrzeugdaches (7) derart steuert und/oder berechnet, dass ein verzerrungsfreies Bild entsteht.

8. System nach einem der vorangegangenen Ansprüche,
**dadurch gekennzeichnet, dass**
das Bild ein sich bewegendes und/oder animiertes Bild ist.

## Claims

1. System for a vehicle having at least one vehicle seat which comprises a seat part (1) and a backrest (2) with a headrest (3) arranged thereabove, and having a vehicle roof (7) which extends at least above the headrest (3),
wherein a projection device (4) is integrated into the headrest (3), which projects an image onto an inner side (9) of the vehicle roof (7),
**characterised in that**
the projection device (4) has a lens structure (5) which performs a direct distribution of the image data-carrying projection light beams (10) emitted by the projection device (4) over an angle (α) of 150°-220°, starting from a surface extension of a virtual plane (6) on an upper side (3a) of the headrest (3),
wherein the system comprises a control device which, by means of control elements in the projection device (4), controls the distribution of the projection light beams (10) on the three-dimensionally extending inner side of the vehicle roof (7) in such a way that a distortion-free image is produced.

2. System according to claim 1,
**characterised in that**
the inner side (9) of the vehicle roof (7) is a headliner and/or a textile cover of a glass roof.

3. System according to one of the previous claims,
**characterised in that**
the inner side (9) is provided with an image-reproducing optimisation layer, such as a luminescent layer, a light reflection layer and/or a retroreflective layer and/or a metallic-pigmented lacquer layer.

4. System according to one of the previous claims,
**characterised in that**
the light beams (10) are distributed over an angle (α) of 180° starting from the surface extension of the virtual plane (6).

5. System according to claim 4,
**characterised in that**
the lens assembly comprises at least one fisheye lens and/or a short-distance projector.

6. System according to claims 4 or 5,
**characterised in that**
the lens assembly consists of two or more lens units (5a, 5b, 5c) arranged next to one another on the headrest (3), the projection light beams (10) of which illuminate individual sections (11a, 11b, 11c) assigned to them on the inside (9) of the vehicle roof.

7. System according to one of the previous claims,
**characterised in that**
a control device controls and/or calculates the distribution of the projection light beams (10) on the preferably three-dimensionally extending inner side (9) of the vehicle roof (7) by means of control elements in the projection device (4) and/or a calculation device in such a way that a distortion-free image is produced.

8. System according to one of the previous claims,
**characterised in that**
the image is a moving and/or animated image.

## Revendications

1. Système pour un véhicule doté d'au moins un siège de véhicule, comportant une partie d'assise (1) et un dossier (2) surmonté d'un appui-tête (3), et d'un toit de véhicule (7) qui s'étend au moins au-dessus de l'appui-tête (3), et dans lequel
un appareil de projection (4) est intégré dans l'appui-tête (3) et projette une image sur une face intérieure (9) du toit (7) du véhicule,
**caractérisé en ce que**
l'appareil de projection (4) présente une structure à lentilles (5) qui effectue une répartition directe des rayons lumineux de projection (10), émis par l'appareil de projection (4) et porteurs de données d'image, sur un angle (α) de 150° à 220°, à partir d'une étendue superficielle d'un plan virtuel (6) sur une face supérieure (3a) de l'appui-tête (3),
ledit système comprenant un dispositif de commande qui, au moyen d'éléments de commande situés dans l'appareil de projection (4), commande la répartition des rayons lumineux de projection (10) sur la face intérieure tridimensionnelle du toit (7) du véhicule de manière à créer une image sans distorsion.

2. Système selon la revendication 1,
**caractérisé en ce que**
la face intérieure (9) du toit (7) du véhicule est une garniture de toit et/ou un revêtement textile d'un toit en verre.

3. Système selon l'une des revendications précédentes,
**caractérisé en ce que**
la face intérieure (9) est pourvue d'une couche d'optimisation de reproduction d'image, telle qu'une couche de luminescence, une couche de réflexion de la lumière et/ou une couche de rétroréflexion et/ou une couche de laque à pigments métalliques.

4. Système selon l'une des revendications précédentes,
**caractérisé en ce que**
les rayons lumineux (10) sont répartis sur un angle (α) de 180° à partir de l'étendue superficielle du plan virtuel (6).

5. Système selon la revendication 4,
**caractérisé en ce que**
la structure à lentilles comprend au moins un objectif de type fisheye et/ou un projecteur à courte distance.

6. Système selon la revendication 4 ou 5,
**caractérisé en ce que**
la structure à lentilles est constituée d'au moins deux unités à lentilles (5a, 5b, 5c) agencées contigües sur l'appui-tête (3) et dont les rayons lumineux de projection (10) éclairent des sections individuelles (11a, 11b, 11c) de la face intérieure (9) du toit du véhicule qui leur sont attribuées.

7. Système selon l'une des revendications précédentes,
**caractérisé en ce que**
un dispositif de commande employant des éléments de commande présents dans l'appareil de projection (4) commande la répartition des rayons lumineux de projection (10) sur la face intérieure (9) de préférence tridimensionnelle du toit (7) du véhicule, et/ou un dispositif de calcul calcule ladite répartition, de manière à créer une image sans distorsion.

8. Système selon l'une des revendications précédentes,
**caractérisé en ce que**
l'image est une image en mouvement et/ou animée.
